# EUROPEAN PATENT SPECIFICATION

(11) **EP 3 819 684 B1**
(45) Date of publication and mention of the grant of the patent: **30.07.2025**
(21) Application number: 19830903.1
(22) Date of filing: 05.07.2019
(51) Int. Cl.: G02B 5/08, B29C 59/04, B42D 25/324, G02B 5/02, G02B 5/18, G02B 5/26

(54) **OPTICAL STRUCTURE**
OPTISCHE STRUKTUR
STRUCTURE OPTIQUE

(30) Priority: 05.07.2018 JP 2018128045
(43) Date of publication of application: 12.05.2021
(73) Proprietor: Toppan Printing Co., Ltd., Tokyo 110-0016 (JP)
(72) Inventor: UCHIDA, Satoshi, Tokyo 110-0016 (JP); EBINA, Kazuyoshi, Tokyo 110-0016 (JP)
(74) Representative: Hoffmann Eitle
(86) International application number: PCT/JP2019/026811
(87) International publication number: WO 2020/009222

(56) References cited:
- EP-A1- 2 960 690
- EP-A1- 3 290 967
- WO-A1-2017/138536
- WO-A1-2020/145265
- JP-A- 2008 107 470
- JP-A- 2008 275 740
- JP-A- 2009 063 703
- JP-A- 2017 505 926
- JP-A- 2018 036 324
- US-A1- 2010 194 091
- US-A1- 2010 254 007

## Description

### [Technical Field]

Present embodiments of the description relate to an optical structure.

### [Background Art]

Optical structures that are difficult to counterfeit are bonded to articles such as securities, cards, and certificates for the purpose of making counterfeiting of the articles difficult. Optical structures have different visual effects from printed matter formed of ink containing a pigment or a dye. The visual effects of optical structures are provided by a fine structure of the optical structures. Optical structures having a fine structure are manufactured by a roll-to-roll method. Examples of the fine structure formed by the roll-to-roll method include a prism (see, for example, Patent Literature 1) and various lenses (see, for example, Patent Literature 2).

Patent Literature 3 describes a display having a light scattering layer covered with a light reflection layer. The display comprises relief structure-forming areas having convexities.

Patent Literature 4 describes a display including light-scattering regions. Each of the light-scattering regions is provided with linear protrusions and/or recesses having the same longitudinal direction.

### [Citation List]

### [Patent Literature]

[PTL 1] JP H11-300768 A
[PTL 2] JP 2001-62853 A
[PTL 3] EP 960 690 A1
[PTL 4] US 2010/254007 A1

Other relevant prior art is known from US2010/0254007.

### [Summary of the Invention]

### [Technical Problem]

When an optical structure having a fine structure is manufactured by the roll-to-roll method, an embossing cylinder is used to transfer the shape of a fine structure to a precursor of the optical structure. The embossing cylinder has an outer surface corresponding to the fine structure of the optical structure. During the transfer of the fine structure shape to the precursor, the outer surface of the embossing cylinder is pressed against the precursor. At this time, in some cases, slipping of the precursor on the embossing cylinder causes wrinkles on the precursor. Thus, it is required to prevent wrinkles on the precursor and consequently on the optical structure.

The present disclosure provides an optical structure capable of preventing occurrence of wrinkles during transfer of shape from an embossing cylinder to the optical structure in a process of manufacturing the optical structure by using the embossing cylinder.

### [Solution to Problem]

The present invention includes a group of embodiments created based on a single unique invention from the above background. The aspects of the present disclosure are those of the group of embodiments based on a single invention. Configurations of the present disclosure can have the respective aspects of the present disclosure. The embodiments of the present invention include the following aspects as a solution according to the present invention. The aspects can be combined with each other, and the combination can achieve synergies. The aspects can also be combined with features of the embodiments, and the combination can achieve synergies. The features of the embodiments can be combined with each other, and the combination can achieve synergies.

The above object is accomplished by the optical structure according to claim 1. The dependent claims concern particular embodiments.

According to thhis configuration, when the embossed layer is formed by using the embossing cylinder, in the embossing cylinder for forming the embossed surface, a precursor layer of the embossed layer is caught by projections for forming the second region of the embossed surface. Furthermore, the projections for forming the second region are located along the linear region; thus, the effect of catching the precursor layer of the embossed layer by the projections is more likely to be applied to a larger region in the precursor layer. Furthermore, projections of the embossing cylinder for forming the boundary region are pressed into the precursor layer more deeply than the other portion of the embossing cylinder. This further enhances the effect of catching the precursor layer by the embossing cylinder. Thus, the precursor layer is prevented from slipping on the embossing cylinder. This prevents occurrence of wrinkles when shape is transferred from the embossing cylinder to the optical structure.

The optical structure may be configured such that the first region includes a plurality of reflection surfaces, the plurality of reflection surfaces each reflect light in the display direction and have shape extending in a first direction, and the plurality of reflection surfaces are arranged at the same pitch in a second direction orthogonal to the first direction.

According to the above configuration, the first region has the reflection surfaces that are arranged at the same pitch when viewed in the thickness direction of the embossed layer. Thus, the embossed layer is easily formed as compared with the case where the first region has reflection surfaces that are arranged at an irregular pitch.

The optical structure may be configured such that the first region includes a plurality of reflection surfaces, the plurality of reflection surfaces each reflect light in the display direction and extend in a first direction, and the plurality of reflection surfaces are arranged in a second direction orthogonal to the first direction and a pitch between the reflection surfaces in the second direction has a plurality of values. According to this configuration, the first image formed of reflection regions is a more complicated image than in the case where the pitch between the reflection surfaces is constant.

The optical structure may be configured such that the first region includes a plurality of first linear regions that are regularly arranged in plan view of the embossed surface, the wave optical region includes a plurality of second linear regions that are regularly arranged in plan view of the embossed surface, and the first linear regions and the second linear regions are alternately arranged in plan view of the embossed surface. According to this configuration, the optical structure can display an image formed by cooperation between the first image formed of the first region and the second image formed of the wave optical region.

The optical structure may be configured such that the plurality of linear regions include at least one of a straight line region and a curved region.

### [Advantageous Effects of the Invention]

The embodiments of the present invention can prevent occurrence of wrinkles during transfer of shape from an embossing cylinder to an optical structure in a process of manufacturing the optical structure by using the embossing cylinder.

### [Brief Description of the Drawings]

Fig. 1 is a cross-sectional view illustrating a structure of an optical structure of an embodiment.
Fig. 2 is a plan view illustrating the structure of the optical structure in Fig. 1.
Fig. 3 is a block diagram schematically illustrating an embossing apparatus used to manufacture the optical structure in Fig. 1.
Fig. 4 is a cross-sectional view illustrating a structure of an embossing cylinder of the embossing apparatus in Fig. 3.
Fig. 5 is a plan view illustrating a part of the outer surface of the embossing cylinder in Fig. 3.
Fig. 6 is a plan view illustrating a structure of an optical structure of a first modification.
Fig. 7 is a plan view illustrating a structure of an optical structure of a second modification.
Fig. 8 is a plan view illustrating a structure of an optical structure of a third modification.
Fig. 9 is a plan view illustrating a structure of an optical structure of a fourth modification.
Fig. 10 is a plan view illustrating a structure of an optical structure of a fifth modification.

### [Description of the Embodiments]

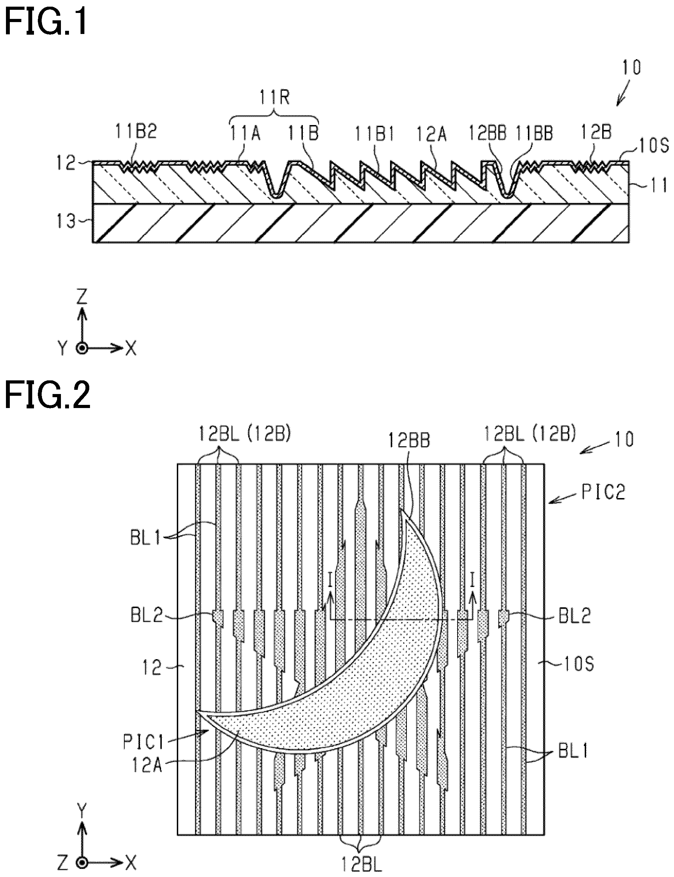

An embodiment of an optical structure will be described with reference to Figs. 1 to 5. In the following, description of the optical structure, an embossing apparatus used to manufacture the optical structure, effects, functions, and benefits of the optical structure, and modifications of the optical structure will be sequentially described.

### [Description of optical structure]

An optical structure will be described with reference to Figs. 1 and 2.

Fig. 1 illustrates a cross-sectional structure of an optical structure that extends along a plane orthogonal to a surface of the optical structure.

As illustrated in Fig. 1, an optical structure 10 includes an embossed layer 11 and an optical interaction layer 12. The embossed layer 11 is a layer that has been embossed, and the embossed layer 11 has an embossed surface 11R including a flat surface 11A and an uneven surface 11B. Fig. 1 illustrates an example in which only one of two opposing surfaces of the embossed layer 11 is the embossed surface 11R; however, both of the two opposing surfaces may be embossed surfaces 11R. The optical interaction layer 12 covers and follows the embossed surface 11R. The optical interaction layer 12 exhibits an optical function of second regions 11B2 of the embossed surface 11R described below. The uneven surface 11B includes first regions 11B1, the second regions 11B2, and boundary regions 11BB. The boundary region 11BB is located between the first region 11B1 and the second region 11B2. The regions of the uneven surface 11B are each composed of a recess that is recessed from the flat surface 11A. The regions of the uneven surface 11B may each include projections that project from the flat surface 11A.

A first recess depth in the first region 11B1 is larger than a second recess depth in the second region 11B2. A recess depth in the boundary region 11BB is larger than the first recess depth and the second recess depth. The second region 11B2 is composed of a plurality of linear regions that are regularly arranged on the embossed surface 11R. The first recess depth is the depth of the recess in the first region 11B1 from the flat surface 11A. The second recess depth is the depth of the recess in the second region 11B2 from the flat surface 11A. The recess depth in the boundary region 11BB, i.e., a third recess depth is the depth of the recess in the boundary region 11BB from the flat surface 11A. In other words, the first recess depth is a distance between the flat surface 11A and the bottom of the recess in the first region 11B1. The second recess depth is a distance between the flat surface 11A and the bottom of the recess in the second region 11B2. The recess depth in the boundary region 11BB is a distance between the flat surface 11A and the bottom of the recess in the boundary region 11BB.

The third recess depth is larger than the first recess depth. The first recess depth is larger than the second recess depth. The recess depth in the boundary region 11BB may be equal to or less than twice the height of an inclined mirror structure (described later). Furthermore, the recess depth in the boundary region 11BB is smaller than the thickness of the embossed layer 11. The recess depth in the boundary region 11BB may be equal to or greater than 1/2 times the thickness of the embossed layer 11.

The thickness of the embossed layer 11 is larger than the recess depth in the boundary region 11BB. The thickness of the embossed layer 11 may be equal to or greater than the depth of the groove in the boundary region 11BB and less than three times the depth of the groove in the boundary region 11BB. The thickness of the embossed layer 11 may be in the range of 1 µm or more and 20 µm or less. The thickness of the embossed layer 11 may be in the range of 2 µm or more and 10 µm or less.

The recess depth in the boundary region 11BB may be 60 µm or less. The recess depth in the boundary region 11BB that is set not to exceed 60 µm can prevent occurrence of bone-like defects that cause a failure in post-processing during molding of a roll-shaped molded product. The bone-like defects are defects in which a roll has streak-like protrusions resembling bone protrusions under the skin.

The width of the groove in the boundary region 11BB may be equal to or greater than the depth of the groove in the boundary region 11BB and less than 500 µm. When the width of the groove is equal to or greater than the depth of the groove in the boundary region 11BB, separation of the embossed surface 11R during molding is easily prevented. If the width of the groove is equal to or greater than the recess depth in the boundary region 11BB, this can ensure good shape even with a high processing speed during processing.

A cross-sectional shape of the groove in the boundary region 11BB may be a shape in which a side surface of the groove in the boundary region 11BB is inclined with respect to the normal direction of a surface of a substrate 13 (described later). The shape in which the side surface is inclined with respect to the normal direction of the surface of the substrate 13 may be a trapezoidal shape or a spindle shape. When the cross-sectional shape of the groove in the boundary region 11BB is a trapezoidal shape, one or more corners of the trapezoidal shape may be curved. When one or more corners of the trapezoidal shape is curved, it is easy to reproduce the shape of the groove in the boundary region 11BB provided in a mold or an embossing cylinder.

The groove in the boundary region 11BB may have a zigzag shape, a curved shape, or a combination of these shapes. The groove having a zigzag shape can provide a vivid appearance. The groove having a curved shape facilitates flow of a forming material. Furthermore, the groove having a curved shape provides a good aesthetic appearance.

The width of the boundary region 11BB may be entirely constant or partially constant. The entire width or a part of the width of the boundary region 11BB may be continuously varied. When the width of the boundary region 11BB is less than 500 µm, the boundary region 11BB is less likely to be visually recognized with the naked eye and provides a better aesthetic appearance. Any of corner portions of the boundary region 11BB may have a curved shape.

The optical interaction layer 12 includes reflection regions 12A that overlap with the first regions 11B1 and wave optical regions 12B that overlap with the second regions 11B2 when viewed in the thickness direction of the embossed layer 11. The first region 11B1 may be a first relief motif having an uneven pattern. The reflection regions 12A reflect light to display a first image in a display direction. The wave optical regions 12B perform at least one optical interaction of diffraction, interference, scattering, absorption, and resonance of light with which the wave optical regions 12B are irradiated. The second region 11B2 may be a second relief motif having an uneven pattern. Thus, the wave optical regions 12B can display a second image in the display direction. The second image is different in at least one of color and brightness from the first image. The first relief motif and the second relief motif may be a collage obtained by connecting the first relief motif and the second relief motif together. The collage obtained by connecting the relief motifs together can display an image in which the first image and the second image are combined.

Thus, the optical interaction layer 12 may include both the reflection regions 12A and the wave optical regions 12B. The optical interaction layer 12 may include the wave optical regions 12B and no reflection regions 12A. When the optical interaction layer 12 includes the wave optical regions 12B and no reflection regions 12A, the optical structure 10 displays the second image, but displays no first image or displays the first image that is darker than in the case where the optical interaction layer 12 includes the reflection regions 12A. The wave optical region 12B may cover the entire second region 11B2, or may cover only a part of the second region 11B2. The optical interaction layer 12 may be located on the flat surface 11A of the embossed layer 11, or may not be located on the flat surface 11A.

The Z direction is a direction parallel to the thickness direction of the optical structure 10. The X direction is a direction orthogonal to the Z direction. The Y direction is a direction that is orthogonal to the Z direction and orthogonal to the X direction. In the present embodiment, the optical structure 10 extends in the XY plane. In the present embodiment, the plurality of linear regions constituting the second region 11B2 are arranged in the X direction and each extend in the Y direction.

A material for forming the embossed layer 11 may be a curable resin or a thermoplastic resin. The embossed layer 11 may be formed of a light-transmitting material. The material for forming the embossed layer 11 may have semi-transparency for transmitting light in the visible range. By using various resins described above as the material for forming the embossed layer 11, and transferring the shape of a fine structure of the embossing cylinder, the embossed layer 11 including the first regions 11B1, the second regions 11B2, and the boundary regions 11BB is formed.

In the embossed layer 11, the first region 11B1 is composed of an inclined mirror structure. The first region 11B1 includes a reflection surface which is a surface inclined at a predetermined angle with respect to the flat surface. The reflection surface specularly reflects light incident on the reflection surface. That is, the reflected incident light has shape and size of the incident light specularly reflected by the reflection surface. As described above, the embossed layer 11 may be a resin layer. When the embossed layer 11 is a resin layer, the optical interaction layer 12 can be provided on the reflection surfaces of the first regions 11B1. The optical interaction layer 12 may have the same size as the first region 11B1 and the second region 11B2.

In the embossed layer 11, the second region 11B2 is composed of a fine uneven structure. The fine uneven structure may be a subwavelength structure or a wavelength order structure. Alternatively, the fine uneven structure may be a structure in which the subwavelength structure and the wavelength order structure are arranged in parallel or a structure in which the subwavelength structure and the wavelength order structure are superimposed. The fine uneven structure has shape that allows the wave optical regions 12B of the optical interaction layer 12 to perform at least one optical interaction of diffraction, interference, scattering, absorption, and resonance of light incident on the wave optical regions 12B. In order for the wave optical region 12B to cause diffraction or interference of light incident on the wave optical region 12B, the second region 11B2 includes, for instance, a plurality of reflection surfaces that are arranged at regular intervals. The plurality of reflection surfaces are arranged at a pitch in the wavelength range of light in the visible range. Thus, the second region 11B2 includes, for instance, a diffraction grating.

In order for the wave optical region 12B to scatter the incident light, the second region 11B2 includes, for instance, a plurality of reflection surfaces that are irregularly arranged on the embossed surface 11R. Thus, the wave optical region 12B isotropically reflects light incident on the wave optical region 12B. The second region 11B2 may include, for instance, a plurality of reflection surfaces that extend in one direction and are irregularly arranged in a direction intersecting the one direction on the embossed surface 11R. Thus, the wave optical region 12B anisotropically reflects light incident on the wave optical region 12B.

In order for the wave optical region 12B to absorb incident light, the second region 11B2 includes, for instance, a plurality of reflection surfaces that are regularly arranged on the embossed surface 11R and arranged at a pitch of less than the shortest wavelength of visible light. When the wave optical region 12B causes resonance of the incident light, the wave optical region 12B has, for instance, shape that causes surface plasmon resonance.

The recess depth, i.e., the depth in the first region 11B1 and the recess depth, i.e., the depth in the second region 11B2 are set relative to the flat surface 11A of the embossed surface 11R. As described above, the depth of the recess in the first region 11B1 is larger than the depth of the recess in the second region 11B2. The depth of the recess in the first region 11B1 may be in the range of 0.5 µm or more and less than 30 µm. When the wave optical region 12B has at least one optical function of absorption, diffraction, interference, scattering, and resonance of light, the depth of the recess in the second region 11B2 may be in the range of 100 nm or more and less than 500 nm. In the present embodiment, the depth of the recess in the first region 11B1 is constant, and the depth of the recess in the second region 11B2 is constant. The first region 11B1 may include recesses having different depths. The second region 11B2 may include recesses having different depths.

The optical interaction layer 12 exhibits an optical function of each of the first regions 11B1 and the second regions 11B2 of the embossed layer 11. The optical interaction layer 12 is thin enough to have shape that follows the embossed surface 11R. The optical interaction layer 12 has a higher refractive index than the embossed layer 11. Thus, the optical interaction layer 12 can exhibit the function of the embossed layer 11. A surface of the optical interaction layer 12 on a side opposite to a surface in contact with the embossed layer 11 is a surface 10S of the optical structure 10. An observer of the optical structure 10 faces the surface 10S of the optical structure 10 and observes the optical structure 10 from a side of the optical interaction layer 12 opposite to that facing the embossed layer 11. The observer of the optical structure 10 may face the substrate 13 (described later) and observe the optical structure 10 from a side of the optical interaction layer 12 closer to the embossed layer 11.

The optical interaction layer 12 may be a deposition layer. The deposition layer can be formed by deposition of a metal, a metal compound, or a silicon oxide. Instances of the metal to be deposited include aluminum, nickel, iron, gold, copper, tin, and zinc. The deposition layer may be formed by deposition of an alloy of these metals. The metal compound to be deposited may be a metal oxide, a metal sulfide, a metal nitride, or a metal fluoride. Instances of the metal oxide include titanium oxide. Instances of the metal sulfide include zinc sulfide. Instances of the metal nitride include calcium nitride. Instances of the metal fluoride include magnesium fluoride and aluminum fluoride. The optical interaction layer 12 may be a layer having a metallic luster or a layer having transparency to light in the visible range. The deposition layer can be formed by vapor deposition, sputtering, or CVD. The optical interaction layer 12 is formed on a part or the entire surface of the second regions 11B2. The optical interaction layer 12 may be formed in the first regions 11B1. The optical interaction layer 12 may cover the entire embossed surface 11R. The deposition layer may be removed from the region other than the first regions 11B1 and the second regions 11B2. The deposition layer can be removed by etching. The etching may be performed so that a region of the deposition layer not to be removed is masked with resin and a region of the deposition layer that is not masked with resin is dissolved using an acidic or alkaline solution.

The reflection regions 12A include a plurality of reflection surfaces. The reflection surfaces each reflect light in the display direction, and extend in the Y direction in the example illustrated in Fig. 1. The Y direction is an example of a first direction. The plurality of reflection surfaces are arranged at the same pitch in the X direction orthogonal to the Y direction. The X direction is an example of a second direction. The reflection surfaces each belong to a single recess. The pitch between the reflection surfaces may be a distance between the bottoms of two recesses adjacent to each other in a direction orthogonal to the direction in which the reflection surfaces extend.

The wave optical region 12B is composed of a plurality of linear regions as with the second region 11B2 described above. The optical interaction layer 12 includes boundary regions 12BB that overlaps with the boundary regions 11BB of the embossed surface 11R when viewed in the thickness direction of the embossed layer 11.

The optical structure 10 may further include the substrate 13. The substrate 13 may be a film or a sheet. The film may be a plastic film, and the sheet may be a plastic sheet. A base material of the film or the sheet may be a thermoplastic polymer or a curable polymer. The film may be a polyethylene terephthalate (PET) film, a polyethylene (PE) film, a polypropylene (PP) film, or a polycarbonate (PC) film. The sheet may be a PET sheet, a PE sheet, a PP sheet, or a PC sheet. The embossed layer 11 is located on one of a pair of opposing surfaces of the substrate 13. The optical structure 10 may have transparency for transmitting light in the visible range, or may have no transparency. The substrate 13 and the embossed layer 11 need to be light transmissive in order to allow the observer of the optical structure 10 to observe an optical effect achieved by the optical interaction layer 12 when the observer faces the substrate 13 and observes the optical structure 10 from the side of the optical interaction layer 12 closer to the embossed layer 11.

The substrate 13 used in the optical structure 10 may have a thickness in the range of 10 µm or more and 200 µm or less. The substrate 13 may be a plastic film. The substrate 13 may be used as a carrier.

If the thickness of the substrate 13 is thinner than 10 µm, wrinkles are more likely to be generated in the substrate 13 while the substrate 13 is formed or transported, and the difficulty of processing tends to be high. If the thickness of the substrate 13 is thicker than 200 µm, when a roll body before or after processing is transported, workability or work safety tends to be low.

The optical structure 10 may include a layer other than the embossed layer 11, the optical interaction layer 12, and the substrate 13. The optical structure 10 may include an adhesive layer for bonding the optical structure 10 to an article or a protective layer for protecting the surface 10S of the optical structure 10.

Fig. 2 illustrates a planar structure of the optical structure 10 in plan view of the surface 10S of the optical structure 10. As described above, the optical interaction layer 12 partially or entirely covers the embossed layer 11, and the optical interaction layer 12 follows the embossed surface 11R of the embossed layer 11. Thus, shape of the reflection regions 12A of the optical interaction layer 12 follows shape of the first regions 11B1 of the embossed surface 11R in plan view of the surface 10S. The wave optical region 12B of the optical interaction layer 12 has the same shape as the second region 11B2 of the embossed surface 11R. The structure of the optical structure 10 in Fig. 1 is a cross-sectional structure of the optical structure 10 taken along line I-I in Fig. 2.

As illustrated in Fig. 2, the wave optical region 12B of the optical interaction layer 12 includes a plurality of linear regions 12BL having a linear shape in plan view of the surface 10S of the optical structure 10. The linear region 12BL is an example of a linear region. The plurality of linear regions 12BL each have a straight line shape extending in the Y direction and are arranged at regular intervals in the X direction. Thus, on the embossed surface 11R, the plurality of linear regions constituting the second region 11B2 each also have a straight line shape extending in the Y direction and are arranged at regular intervals in the X direction.

In the present embodiment, the plurality of linear regions 12BL include only straight line regions. The plurality of linear regions 12BL only need to include at least one of a straight line region and a curved region. That is, the plurality of linear regions 12BL may be composed of only a plurality of curved regions, or may be composed of both a straight line region and a curved region. The linear region 12BL may be a broken-line-shaped region, i.e., a region in which a plurality of portions of a linear region are successively arranged at intervals in a direction in which the linear region extends.

The plurality of linear regions 12BL include a linear region 12BL having a thin line BL1 and a thick line BL2. The thick line BL2 is a portion of the linear region 12BL having a larger width in the X direction than the thin line BL1. In plan view of the surface 10S, an outer shape formed by the plurality of thick lines BL2 is a predetermined shape. In the present embodiment, the outer shape formed by the plurality of thick lines BL2 is a star shape. The observer of the optical structure 10 can recognize the star shape formed of the wave optical regions 12B in plan view of the surface 10S. In other words, a second image PIC2 formed of the wave optical regions 12B includes a star expressed by the outer shape formed of the plurality of thick lines BL2.

In plan view of the surface 10S, the reflection region 12A has a predetermined outer shape. In the present embodiment, the reflection region 12A has a moon (crescent) shape. The moon-shaped portion which is the reflection region 12A is superimposed on the star shape formed of the plurality of thick lines BL2 in plan view of the surface 10S. The reflection region 12A displays a first image PIC1 having a moon shape in the display direction by the reflection surfaces of the reflection region 12A.

The outer shape formed of the plurality of thick lines BL2 and the shape of the reflection region 12A in plan view of the surface 10S are not limited to the shapes described above. The outer shape formed of the plurality of thick lines BL2 and the shape of the reflection region 12A may be, for instance, text, a character, or a number.

In plan view of the surface 10S, the boundary region 12BB has shape that follows the outer shape of the reflection region 12A. In other words, the boundary region 12BB surrounds the reflection region 12A throughout the entire outer shape of the reflection region 12A. The boundary region 12BB only needs to be located at least at the boundary between the reflection region 12A and the wave optical region 12B in plan view of the surface 10S.

### [Embossing apparatus]

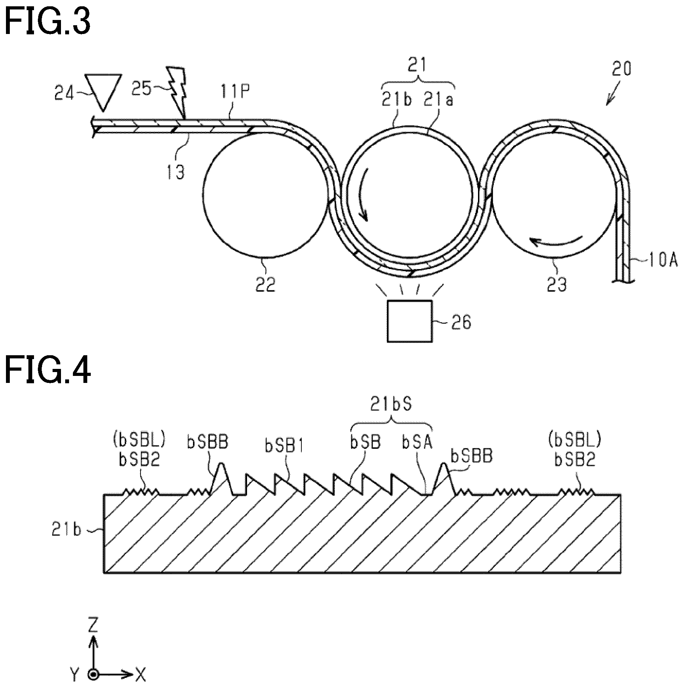

An embossing apparatus will be described with reference to Figs. 3 to 5.

Fig. 3 schematically illustrates an embossing apparatus. The embossing apparatus described below is a manufacturing apparatus capable of manufacturing the optical structure 10.

As illustrated in Fig. 3, an embossing apparatus 20 includes an embossing cylinder 21, a pressing roll 22, and a conveying roll 23. The embossing apparatus 20 may further include an injector 24, a heater 25, and a lamp 26. A direction in which a precursor 10A of the optical structure 10 is conveyed is a conveying direction. The injector 24, the heater 25, and the lamp 26 are sequentially arranged from an unwinding side toward a winding side in the conveying direction. When the material for forming the embossed layer 11 is an ultraviolet curable resin, the lamp 26 may be an ultraviolet lamp. A material for forming the precursor 10A may be an uncured curable resin, a thermoplastic resin, or a thermoplastic curable resin.

The injector 24 supplies an uncured curable resin onto the substrate 13 constituting the precursor 10A. The uncured curable resin supplied from the injector 24 forms a precursor layer 11P of the embossed layer 11 on the substrate 13. The heater 25 can heat the curable resin supplied from the injector 24 to the substrate 13 to soften the curable resin, soften the curable resin and accelerate curing of the curable resin, or soften and cure the curable resin. Heating by the heater 25 can improve formability of the embossed layer 11.

The embossing cylinder 21 and the pressing roll 22 have a columnar shape extending in the transverse direction crossing the substrate 13. The transverse direction is a direction orthogonal to the conveying direction described above. The embossing cylinder 21 and the pressing roll 22 convey the precursor 10A in a space between the embossing cylinder 21 and the pressing roll 22. When the precursor 10A is conveyed in the space between the embossing cylinder 21 and the pressing roll 22, the pressing roll 22 is in contact with the substrate 13 and presses the precursor layer 11P on the substrate 13 against the outer surface of the embossing cylinder 21.

The embossing cylinder 21 includes a cylinder 21a and a mold 21b. The cylinder 21a has a columnar shape extending in the transverse direction of the substrate 13. The mold 21b has a cylindrical shape covering the outer periphery of the cylinder 21a. A surface of the mold 21b has an uneven shape to be transferred to the precursor layer 11P. When the pressing roll 22 presses the precursor layer 11P against the mold 21b, the uneven shape of the mold 21b is transferred to the precursor layer 11P.

The lamp 26 can irradiate the precursor layer 11P with light to cure the precursor layer 11P. The precursor layer 11P is cured to form the embossed layer 11. The lamp 26 may be a discharge lamp, an LED light, or both. The discharge lamp may be an electrodeless lamp, a mercury lamp, or a metal halide lamp. The mercury lamp may be a high pressure mercury lamp. For the LED light, a wide band gap semiconductor may be used. The wide band gap semiconductor has a higher luminous efficiency for short wavelength light. The wide band gap semiconductor is suitable for ultraviolet LED lights. Ultraviolet LED lights can emit ultraviolet light. The lamp 26 may be a lamp suitable for curing properties of the curable resin supplied from the injector 24.

The conveying roll 23 has a columnar shape extending in the transverse direction of the substrate 13 as with the pressing roll 22 and the embossing cylinder 21. The embossing cylinder 21 and the conveying roll 23 convey the precursor 10A between the embossing cylinder 21 and the conveying roll 23. The conveying roll 23 conveys the precursor 10A after irradiation with ultraviolet light. Thus, the precursor 10A in contact with the conveying roll 23 has the embossed layer 11. When the conveying roll 23 comes into contact with the substrate 13 of the precursor 10A and conveys the precursor 10A between the embossing cylinder 21 and the conveying roll 23, the embossed layer 11 of the precursor 10A is separated from the embossing cylinder 21.

On the embossed layer 11 of the precursor 10A obtained in this manner, the optical interaction layer 12 is formed to obtain the optical structure 10 described above.

When the resin for forming the embossed layer 11 is an electron beam curable resin, the embossing apparatus 20 may include a lamp that emits an electron beam, instead of the lamp 26 that emits ultraviolet light. That is, when the resin for forming the embossed layer 11 is a resin that is cured by light other than ultraviolet light, the embossing apparatus 20 may include a lamp that emits light for curing the embossed layer 11, instead of the lamp 26.

When the resin for forming the embossed layer 11 is a thermosetting resin, the embossing apparatus 20 may include, instead of the heater 25 and the lamp 26, a heater that heats the precursor layer 11P while the precursor layer 11P is in contact with the mold 21b or heats the precursor layer 11P after the precursor layer 11P is in contact with the mold 21b. When the resin for forming the embossed layer 11 is a thermoplastic resin, the lamp 26 may be omitted in the embossing apparatus 20, and the heater 25 may heat the precursor layer 11P to such an extent that the uneven shape of the mold 21b can be transferred to the precursor layer 11P.

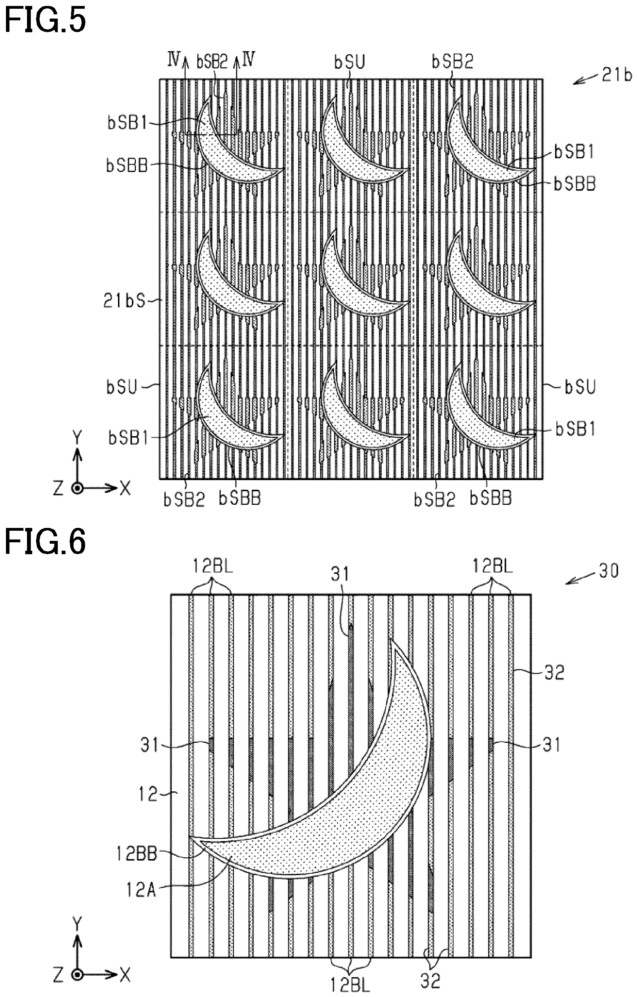

The configuration of the mold 21b of the embossing cylinder 21 will be more specifically described with reference to Figs. 4 and 5. Fig. 5 illustrates a planar structure of the mold 21b before the mold 21b is placed around the cylinder 21a, in other words, the mold 21b having a flat plate shape in plan view of a surface of the mold 21b. Fig. 4 illustrates a partial cross-sectional structure of the mold 21b. Fig. 4 illustrates a cross-sectional structure taken along line IV-IV in Fig. 5.

As illustrated in Fig. 4, the mold 21b has a surface 21bS. The surface 21bS is a surface of the mold 21b in contact with the precursor layer 11P during manufacture of the optical structure 10. An uneven shape of the surface 21bS is transferred to the precursor layer 11P. The surface 21bS is composed of a flat surface bSA and an uneven surface bSB. The uneven surface bSB is composed of a plurality of projections each of which projects from the flat surface bSA.

The uneven surface bSB includes first regions bSB1, second regions bSB2, and boundary regions bSBB. The first region bSB1 of the uneven surface bSB is a region for forming the first region 11B1 of the embossed surface 11R. The second region bSB2 of the uneven surface bSB is a region for forming the second region 11B2 of the embossed surface 11R. The boundary region bSBB of the uneven surface bSB is a region for forming the boundary region 11BB of the embossed surface 11R. Thus, the regions of the uneven surface bSB have uneven shapes corresponding to the regions of the embossed surface 11R to be formed by the respective regions of the uneven surface bSB.

The height of the projections in the regions is set relative to the flat surface bSA. In other words, the height of the projections is a distance between the flat surface bSA and the top of the projections. On the uneven surface bSB, the projections in the first regions bSB1 have a larger height than the projections in the second regions bSB2, and the projections in the boundary regions bSBB have a larger height than both the projections in the first regions bSB 1 and the projections in the second regions bSB2.

The second region bSB2 is composed of a plurality of linear regions bSBL extending in the Y direction. The linear regions bSBL extend in the Y direction and are arranged at regular intervals in the X direction. The plurality of linear regions bSBL include a region having a straight line shape extending in the Y direction and a region having a linear shape extending discontinuously in the Y direction. When the embossing cylinder 21 is placed in the embossing apparatus 20, the direction in which the linear regions bSBL extend is the direction in which the substrate 13 is conveyed.

As illustrated in Fig. 5, the surface 21bS has a plurality of subregions bSU. The subregion bSU is a portion of the surface 21bS for forming the embossed layer 11 of a single optical structure 10. The subregion bSU includes the first region bSB1, the second region bSB2, and the boundary region bSBB. In the optical structure 10, the embossed surface 11R of the embossed layer 11 has an uneven shape obtained by inverting a portion of the mold 21b included in a single subregion bSU.

A material for forming the mold 21b may be metal, an elastomer, or glass. The mold 21b may have a thickness in the range of 50 µm or more and 1 mm or less. A mold made of metal can be formed by electroforming. Instances of the metal used for electroforming include nickel and copper. Furthermore, the mold 21b may be composed of a mold body and a plating layer that covers a surface of the mold body. The mold body can be formed by electroforming. The plating layer that covers the surface of the mold body may have a thickness in the range of 0.1 µm or more and 10 µm or less. Insatence of a metal of the plating layer that covers the surface of the mold body include chromium.

Thus, electroforming can be used to form the mold 21b. The electroforming may be electroforming using a mold, i.e., plating on a mold. The mold may be a mold on which a plurality of pattern recording media are arranged. The pattern recording media arranged on the mold are formed by connecting pattern recording media together in a tile pattern. The pattern recording media may be a collage formed by connecting relief motifs together. The relief motif can be formed by lithography, engraving, or corrosion.

When the material for forming the mold 21b is a resin, a surface shape of an original plate is transferred to a resin film to manufacture the mold 21b having the surface 21bS. At this time, the resin supplied to the original plate flows toward recesses of the original plate for forming the boundary regions bSBB. Thus, in the original plate, the resin also easily flows into recesses for forming the first regions bSB1 and recesses for forming the second regions bSB2.

The embossing cylinder 21 may be composed of only a columnar member. In this case, the outer surface of the columnar member is the surface of the embossing cylinder 21, and the surface of the embossing cylinder 21 has an uneven surface corresponding to the embossed surface 11R of the optical structure 10.

### [Effects, functions, and benefits of optical structure]

Effects, functions, and benefits of the optical structure 10 will be described below.

### [First effect, function, and benefit of optical structure]

In the embossing apparatus 20, the embossing cylinder 21 functions as not only a plate for forming the embossed surface 11R of the optical structure 10 but also a conveying roll that conveys the precursor 10A in contact with the embossing cylinder 21 in the conveying direction.

As described above, the surface 21bS of the mold 21b has the plurality of linear regions bSBL having a linear shape extending in the conveying direction. Furthermore, the linear regions bSBL are each composed of a plurality of projections. Thus, the precursor 10A is conveyed in the conveying direction while the precursor layer 11P is caught by the linear regions bSBL, in other words, while the precursor layer 11P is prevented from slipping on the surface 21bS of the mold 21b. This prevents occurrence of wrinkles on the precursor layer 11P.

On the surface 21bS of the mold 21b, the boundary region bSBB is located between the first region bSB1 and the second region bSB2. The boundary region bSBB has a larger height than the first region bSB1 and the second region bSB2. Thus, the boundary region bSBB is pressed more deeply into the precursor layer 11P than these two regions. This further prevents the precursor layer 11P from slipping on the surface 21bS of the mold 21b.

The boundary region 11BB of the embossed layer 11 formed by transfer of the shape of the boundary region bSBB has a smaller thickness than the other portion of the embossed layer 11. Thus, in the embossed layer 11, the boundary region 11BB is softer than the first region 11B1 and the second region 11B2 that sandwich the boundary region 11BB. When the embossed layer 11 is separated from the mold 21b, a force caused by separation of the projections from the embossed layer 11 acts on the first regions 11B1 and the second regions 11B2 into which the projections of the mold 21b are pressed. The force is reduced by the boundary regions 11BB which are relatively soft, in other words, which are relatively easily deformed. Thus, the embossed layer 11 is less likely to be deformed during separation of the embossed layer 11 from the mold 21b.

As the precursor 10A is conveyed at a higher conveying speed, wrinkles are more likely to be generated on the precursor layer 11P. In the optical structure 10 of the present embodiment, wrinkles are less likely to be generated on the precursor layer 11P even at a high conveying speed of the precursor 10A. This can improve the efficiency of producing the optical structure 10.

In some cases, the mold 21b has a variation in the thickness or has distortion. This makes it difficult to place the mold 21b around the cylinder 21a without any misalignment or the like on the outer surface of the cylinder 21a. Thus, when the embossing cylinder 21 is composed of the cylinder 21a and the mold 21b, during conveyance of the precursor 10A by the embossing cylinder 21, the precursor layer 11P is more likely to be misaligned on the surface 21bS than in the case where the outer surface of the member constituting the embossing cylinder is an uneven surface. In this regard, the present embodiment achieves a more significant effect of preventing occurrence of wrinkles on the precursor layer 11P when the embossing cylinder 21 is composed of the cylinder 21a and the mold 21b.

Furthermore, as described above, the second regions 11B2 of the embossed surface 11R display the second image PIC2 in the display direction due to the optical effect exhibited by the wave optical regions 12B of the optical interaction layer 12. Thus, the second regions 11B2 formed to prevent the precursor layer 11P from slipping on the surface 21bS of the mold 21b during manufacture of the optical structure 10 enhances the designability of the optical structure 10. The second regions 11B2 display the second image PIC2 due to an optical effect different from the optical effect exhibited by the reflection region 12A; thus, the designability of the first image PIC1 formed of the reflection region 12A is not deteriorated.

### [Second effect, function, and benefit of optical structure]

As the precursor 10A is conveyed at a higher conveying speed, air is more likely to be drawn between the precursor layer 11P and the surface 21bS of the embossing cylinder 21. The air generates air bubbles located between the precursor layer 11P and the surface 21bS of the mold 21b. The air bubbles cause defects in the embossed surface 11R of the embossed layer 11. The defects in the embossed surface 11R caused by the high conveying speed can be improved by increasing the amount of resin supplied to the substrate 13, i.e., the amount of resin supplied between the substrate 13 and the embossing cylinder 21.

As compared with a flat surface, the second regions bSB2 of the surface 21bS of the mold 21b is more likely to cause the resin supplied to the linear regions bSBL to flow to the outside of the linear regions bSBL. Thus, the resin coming into contact with the surface 21bS of the mold 21b is easily spread over the entire portion between the substrate 13 and the surface 21bS. For example, the resin is easily spread over the portion between the substrate 13 and the first regions bSB1. Accordingly, air bubbles are less likely to be formed between the precursor layer 11P and the surface 21bS of the mold 21b. Thus, when the precursor 10A is conveyed at a high conveying speed, occurrence of defects in the embossed surface 11R is prevented without increasing the amount of resin supplied to the substrate 13 as compared with the case where the precursor 10A is conveyed at a lower conveying speed.

This can reduce the amount of resin for forming the embossed layer 11, leading to a smaller thickness of the embossed layer 11. This makes it possible to manufacture an article such as a transfer foil in which the embossed layer 11 is required to have a thickness in a predetermined range.

As described above, the embodiment of the optical structure can achieve the following effects.
(1) When the embossed layer 11 is formed by using the embossing cylinder 21, in the embossing cylinder 21 for forming the embossed surface 11R, the precursor layer 11P is caught by the projections for forming the second regions 11B2 of the embossed surface 11R. Furthermore, the projections for forming the second regions 11B2 are located along the linear regions; thus, the effect of catching the precursor layer 11P by the projections is more likely to be applied to a larger region in the precursor layer 11P. Furthermore, the projections of the embossing cylinder 21 for forming the boundary regions 11BB are pressed into the precursor layer 11P more deeply than the other portion of the embossing cylinder 21. This further enhances the effect of catching the precursor layer 11P by the embossing cylinder 21. Thus, the precursor layer 11P is prevented from slipping on the embossing cylinder. This prevents occurrence of wrinkles when the uneven shape is transferred from the embossing cylinder 21 to the optical structure 10.
(2) The plurality of reflection surfaces are arranged at the same pitch. Accordingly, the first regions 11B1 that overlap with the reflection regions 12A have the surfaces that are arranged at the same pitch when viewed in the thickness direction of the embossed layer 11. Thus, the embossed layer 11 is easily formed as compared with the case where the first regions 11B1 have surfaces that are arranged at an irregular pitch.

The embodiment described above may be modified and implemented as follows.

### [Modifications]

Five modifications of the optical structure 10 will be described with reference to Figs. 6 to 10. Figs. 6 to 10 each illustrate a planar structure of an optical structure viewed in a direction perpendicular to a surface of the optical structure of the modification.

### [First modification]

The second regions 11B2 of the embossed surface 11R, in other words, the wave optical regions 12B of the optical interaction layer 12, may include two or more regions having different densities of the recesses constituting the wave optical region 12B.

As illustrated in Fig. 6, in an optical structure 30, the plurality of linear regions 12BL include linear regions 12BL composed of high density regions 31 and low density regions 32. The density of the recess in the high density region 31 is higher than the density of the recess in the low density region 32. The plurality of linear regions 12BL include a linear region 12BL composed of only a low density region 32.

The low density regions 32 and the high density regions 31 have different optical effects. For example, the high density regions 31 and the low density regions 32 each include a diffraction grating, and diffracted light in the visible range emerges in the display direction from the diffraction grating. In this case, when the diffraction gratings of the high density regions 31 and the low density regions 32 have different pitches, the high density regions 31 and the low density regions 32 can have different densities of recesses. This allows light of different colors to emerge in the display direction from the high density regions 31 and the low density regions 32. The emergence from the high density regions 31 of light of a color different from a color of light emerging from the low density regions 32, in other words, the contrast between the high density regions 31 and the low density regions 32, allows the high density regions 31 to form a star-shaped image.

### [Second modification]

The second regions of the embossed surface 11R, in other words, the wave optical regions of the optical interaction layer 12 may extend in a direction intersecting the Y direction.

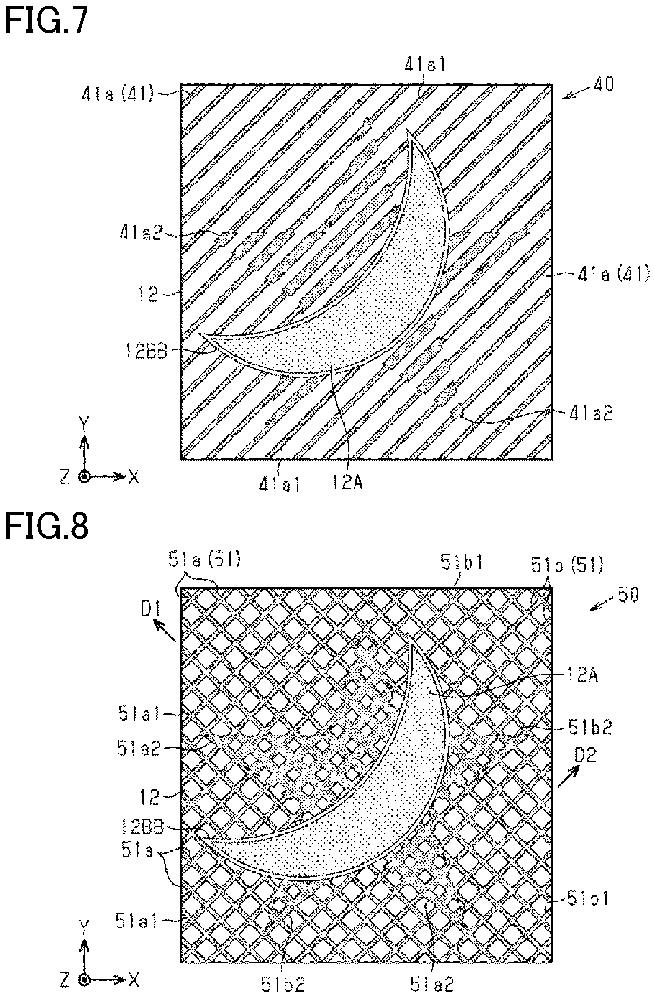

As illustrated in Fig. 7, wave optical regions 41 of an optical structure 40 are composed of a plurality of linear regions 41a. The linear regions 41a each have a straight line shape extending in a direction intersecting the Y direction. The plurality of linear regions 41a include a linear region 41a composed of a thin line 41a1 and a thick line 41a2. The plurality of linear regions 41a include a linear region 41a composed of only a thin line 41a1. The outer shape formed of the plurality of thick lines 41a2 is a star shape as with the outer shape formed by the plurality of thick lines BL2 of the optical structure 10 described above.

### [Third modification]

The second regions of the embossed surface 11R, in other words, the wave optical regions of the optical interaction layer 12 may include a wave optical region extending in a first direction and a wave optical region extending in a second direction different from the first direction.

As illustrated in Fig. 8, wave optical regions 51 of an optical structure 50 may be composed of a plurality of first linear regions 51a extending in a first direction D1 and a plurality of second linear regions 51b extending in a second direction D2. The first direction D1 and the second direction D2 are directions that intersect the Y direction. The first direction D1 and the second direction D2 are inclined at 45° with respect to the Y direction and are different from each other.

The plurality of first linear regions 51a are arranged at regular intervals in the second direction D2 orthogonal to the first direction D1. The plurality of second linear regions 51b are arranged at regular intervals in the first direction D1 orthogonal to the second direction D2. A single first linear region 51a is orthogonal to the plurality of second linear regions 51b. A single second linear region 51b is orthogonal to the plurality of first linear regions 51a. Thus, a part of the wave optical region 51 has a square lattice in plan view of a plane in which the optical structure 50 extends.

The plurality of first linear regions 51a include a first linear region 51a composed of a thin line 51a1 and a thick line 51a2. The plurality of first linear regions 51a include a first linear region 51a composed of only a thin line 51a1. The plurality of second linear regions 51b include a second linear region 51b composed of a thin line 51b1 and a thick line 51b2. The plurality of second linear regions 51b include a second linear region 51b composed of only a thin line 51b1. The thin line 51a1 of the first linear region 51a has the same width as the thin line 51b1 of the second linear region 51b, and the thick line 51a2 of the first linear region 51a has the same width as the thick line 51b2 of the second linear region 51b. The outer shape formed by the plurality of thick lines 51a2 and 51b2 is a star shape.

The thin line 51a1 of the first linear region 51a and the thin line 51b1 of the second linear region 51b may have different widths. The thick line 51a2 of the first linear region 51a and the thick line 51b2 of the second linear region 51b may have different widths. The directions in which the linear regions extend may include three or more directions. Two linear regions extending in different directions may intersect each other at an angle other than the right angle.

### [Fourth modification]

The reflection regions are composed of a plurality of first linear regions that are regularly arranged in plan view of the embossed surface, and the wave optical regions are composed of a plurality of second linear regions that are regularly arranged in plan view of the embossed surface. In this case, the first linear regions and the second linear regions are alternately arranged in plan view of the embossed surface.

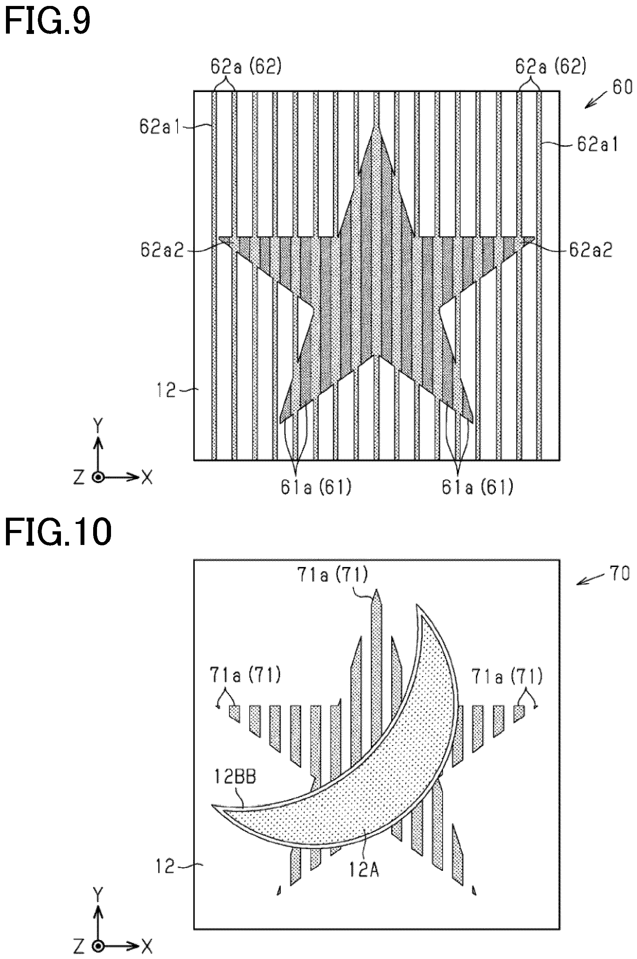

As illustrated in Fig. 9, in an optical structure 60, reflection regions 61 may be composed of a plurality of linear regions 61a. The linear region 61a is an example of a first linear region. In Fig. 9, the linear regions 61a each extend in the Y direction. The plurality of linear regions 61a are arranged at regular intervals in the X direction. Wave optical regions 62 are composed of a plurality of linear regions 62a. The linear region 62a is an example of a second linear region. The linear regions 62a each extend in the Y direction. In Fig. 9, the plurality of linear regions 62a are arranged at regular intervals in the X direction.

The plurality of linear regions 62a include a linear region 62a composed of a thin line 62a1 and a thick line 62a2. The plurality of linear regions 62a include a linear region 62a composed of only a thin line 62a1. The linear regions 61a constituting the reflection regions 61 are each located between two thick lines 62a2 in the X direction.

The reflection regions 61 and the plurality of thick lines 62a2 form a single star shape in plan view of a plane in which the optical structure 60 extends. The outer shape of the reflection regions 61 is a star shape, and the outer shape formed of the plurality of thick lines 62a2 is a star shape. The reflection regions 61 may form a single shape together with the thin lines 62a1 instead of the thick lines 62a2 of the wave optical regions 62.

In the fourth modification, a boundary region is located between the linear region 61a constituting the reflection region 61 and the linear region 62a constituting the wave optical region 62.

Such a configuration can achieve the following effect.

(3) The optical structure 60 can display an image formed by cooperation between a first image formed of the reflection regions 61 and a second image formed of the wave optical regions 62.

When the optical interaction layer includes no linear region 61a, the linear regions of the embossed layer and the linear regions 62a of the optical interaction layer are alternately arranged. In this case, the linear region of the embossed layer is an example of the first linear region.

### [Fifth modification]

The linear regions constituting the second regions of the embossed layer 11 may have shape extending only in part of a portion in which the first region and the boundary region are not located in the direction in which the linear regions extend. In other words, the linear regions constituting the wave optical regions of the optical interaction layer 12 may have shape extending only in part of a portion in which the reflection region and the boundary region are not located in the direction in which the linear regions extend.

As illustrated in Fig. 10, wave optical regions 71 of an optical structure 70 may be composed of a plurality of linear regions 71a. The linear regions 71a each extend in the Y direction. The linear regions 71a each have shape extending only in part of a portion in which the reflection region 12A and the boundary region 12BB are not located in the direction in which the linear regions 71a extend. The plurality of linear regions 71a are arranged at regular intervals in the X direction.

The fifth modification may be combined with the configuration of the second modification, the configuration of the third modification, or the configuration of the fourth modification. More specifically, when the fifth modification is combined with the configuration of the second modification, for example, the optical structure may be configured such that the linear regions 41a composed of the thin line 41a1 and the thick line 41a2 are composed of only the thick line 41a2 and such that the linear regions 41a composed of only the thin line 41a1 are omitted.

When the fifth modification is combined with the configuration of the third modification, for example, the optical structure may be configured such that the first linear regions 51a composed of the thin line 51a1 and the thick line 51a2 are composed of only the thick line 51a2 and that the first linear regions 51a composed of only the thin line 51a1 are omitted. Alternatively, the optical structure may be configured such that the second linear regions 51b composed of the thin line 51b1 and the thick line 51b2 are composed of only the thick line 51b2 and such that the second linear regions 51b composed of only the thin line 51b1 are omitted. Alternatively, the optical structure may be configured such that in both the first linear regions 51a and the second linear regions 51b, the thin line is omitted in the linear regions including the thick line and that the linear regions composed of only the thin line are omitted.

When the fifth modification is combined with the configuration of the fourth modification, for example, the optical structure may be configured such that the linear regions 62a composed of the thin line 62a1 and the thick line 62a2 are composed of only the thick line and that the linear regions 62a composed of only the thin line 62a1 are omitted.

### [Reflection region]

· In the reflection regions 12A, the pitch between the reflection surfaces in the X direction may have a plurality of values. Such a configuration can achieve the following effect.

(4) The first image PIC1 formed of the reflection regions 12A is a more complicated image than in the case where the pitch between the reflection surfaces is constant.

### [Boundary region]

· The boundary regions 11BB of the embossed layer 11, in other words, the boundary regions 12BB of the optical interaction layer 12 may be composed of a plurality of recesses. That is, in the boundary regions 12BB, a plurality of recesses may be arranged in the X direction.

All the above embodiments are the embodiments of the present invention and may be combined. The combination of the embodiments can achieve synergistic effects, functions, and benefits.

The embodiments of the present invention have been described in detail with reference to the drawings. The specific configuration is not limited to the embodiments, but also includes all embodiments that provide a design within the scope defined by the claims.

The terms "portion", "element", "region", "segment", "unit", "printed matter", and "article" used in the present disclosure refer to physical entities. The physical entity can refer to a physical form or a spatial form surrounded by matter. The physical entity may be a structure. The structure may have a specific function. A combination of structures having a specific function can exhibit a synergistic effect by combination of the functions of the structures.

The terms used in the present disclosure and particularly in the appended claims (e.g., the text of the appended claims) are generally intended as "open" terms (e.g., the term "have" should be interpreted as "at least have", and the term "include" should be interpreted as "include, but are not limited to" or the like).

The terms, configurations, features, aspects, and embodiments should be interpreted with reference to the drawings as necessary. Matters that can be directly and unambiguously derived from the drawings should be a basis for amendment as with the text.

Furthermore, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such claim to embodiments containing only one such recitation. The introductory phrase "one or more" or "at least one" and the indefinite article "a" or "an" (e.g., "a" and/or "an") should be interpreted at least as "at least" ("one" or "one or more"). The same applies to the use of definite articles used to introduce claim recitation.

### [Reference Signs List]

10, 30, 40, 50, 60, 70 ... Optical structure
10A ... Precursor
10S, 21bS ... Surface
11 ... Embossed layer
11A, bSA... Flat surfaces
11B, bSB ... Uneven surfaces
11B1, bSB1 ... First regions
11B2, bSB2 ... Second regions
11BB, 12BB, bSBB ... Boundary regions
11P ... Precursor layer
11R ... Embossed surface
12 ... Optical interaction layer
12A, 61 ... Reflection regions
12B, 41, 51, 62, 71 ... Wave optical regions
12BL, 41a, 61a, 62a, 71a, bSBL ... Linear regions
13 ... Substrate
20 ... Embossing apparatus
21 ... Embossing cylinder
21a ... Cylinder
21b ... Mold
22 ... Pressing roll
23 ... Conveying roll
24 ... Injector
25 ... Heater
26 ... Lamp
31 ... High density regions
32 ... Low density regions
41a1, 51a1, 51b1, 62a1, BL1 ... Thin lines
41a2, 51a2, 51b2, 62a2, BL2 ... Thick lines
51a ... First linear regions
51b ... Second linear regions
bSU ... Subregions
PIC1 ... First image
PIC2 ... Second image

## Claims

1. An optical structure (10) comprising:
a substrate (13);
an embossed layer (11) that has an embossed surface (11R) embossed by an embossing cylinder and that is located on one of a pair of opposing surfaces of the substrate (13), the embossed surface having a flat surface (11A) and an uneven surface (11B); and
an optical interaction layer (12) that covers and follows the embossed surface and exhibits an optical function of the embossed surface, wherein:
the uneven surface (11B) includes a first region (11B1), a second region (11B2), and a boundary region (11BB) that is located between the first region and the second region, and the regions each include a recess that is recessed from the flat surface;
the first region (11B1) is a first relief motif having an uneven pattern and the second region (11B2) is a second relief motif having an uneven pattern;
the recess in the first region (11B1) is recessed from the flat surface (11A) to a first recess depth, the recess in the second region (11B2) is recessed from the flat surface (11A) to a second recess depth, and the first recess depth is larger than the second recess depth;
the recess in the boundary region (11BB) is recessed from the flat surface (11A) to a third recess depth, and the third recess depth is larger than the first recess depth and larger than the second recess depth;
a cross-sectional shape of the recess in the boundary region (11BB) is a shape in which a side surface of the recess in the boundary region (11BB) is inclined with respect to the normal direction of a surface of the substrate (13);
the second region (11B2) includes a plurality of linear regions that are regularly arranged on the embossed surface;
the optical interaction layer (12) includes a wave optical region (12B) that overlaps with at least part of the second region (11B2) when viewed in a thickness direction of the embossed layer;
an observer observes the optical structure (10) from a side of the optical interaction layer (12) opposite to that facing the embossed layer (11);
the first region (11B1) reflects light to display a first image (PIC1) in a display direction;
the wave optical region (12B) performs at least one optical function of diffraction, interference, scattering, absorption, and resonance of light with which the wave optical region is irradiated, thereby displaying a second image (PIC2) in the display direction, the second image being different in at least one of color and brightness from the first image;
the first region (11B1) includes a plurality of first linear regions that are regularly arranged in plan view of the embossed surface;
the wave optical region (12B) includes a plurality of second linear regions (12BL) that are regularly arranged in plan view of the embossed surface; and
the first linear regions and the second linear regions are alternately arranged in plan view of the embossed surface;
the plurality of second linear regions (12BL) include a linear region (12BL) having a thin line (BL1) and a thick line (BL2);
the thick line (BL2) is a portion of the second linear region (12BL) having a larger width than the thin line (BL1); and
the second image (PIC2) formed of the wave optical regions (12B) includes a predetermined shape expressed by the outer shape formed of the plurality of thick lines (BL2).

2. The optical structure (10) according to claim 1, wherein:
the first region (11B1) includes a plurality of reflection surfaces (12A);
the plurality of reflection surfaces each reflect light in the display direction and extend in a first direction; and
the plurality of reflection surfaces are arranged at the same pitch in a second direction orthogonal to the first direction.

3. The optical structure (10) according to claim 1, wherein:
the first region (11B1) includes a plurality of reflection surfaces (12A);
the plurality of reflection surfaces each reflect light in the display direction and extend in a first direction; and
the plurality of reflection surfaces are arranged in a second direction orthogonal to the first direction, and a pitch between the reflection surfaces in the second direction has a plurality of values.

4. The optical structure (10) according to claim 1, wherein the plurality of linear regions include at least one of a straight line region and a curved region.

## Patentansprüche

1. Optische Struktur (10), umfassend:
ein Substrat (13);
eine Prägeschicht (11), die eine geprägte Oberfläche (11R) aufweist, die durch einen Prägezylinder geprägt ist und die an einer von einem Paar gegenüberliegender Oberflächen des Substrats (13) gelegen ist, wobei die geprägte Oberfläche eine ebene Oberfläche (11A) und eine unebene Oberfläche (11B) aufweist; und
eine optische Interaktionsschicht (12), die die geprägte Oberfläche abdeckt und ihr folgt und eine optische Funktion der geprägten Oberfläche vorweist, wobei:
die unebene Oberfläche (11B) einen ersten Bereich (11B1), einen zweiten Bereich (11B2) und einen Grenzbereich (11BB), der zwischen dem ersten Bereich und dem zweiten Bereich gelegen ist, einschließt, und die Bereiche jeweils eine Aussparung einschließen, die aus der ebenen Oberfläche ausgespart ist;
der erste Bereich (11B1) ein erstes Reliefmotiv ist, das ein unebenes Muster aufweist, und der zweite Bereich (11B2) ein zweites Reliefmotiv ist, das ein unebenes Muster aufweist;
die Aussparung im ersten Bereich (11B1) aus der ebenen Oberfläche (11 A) bis zu einer ersten Aussparungstiefe ausgespart ist, die Aussparung im zweiten Bereich (11B2) aus der ebenen Oberfläche (11 A) bis zu einer zweiten Aussparungstiefe ausgespart ist und die erste Aussparungstiefe größer ist als die zweite Aussparungstiefe;
die Aussparung im Grenzbereich (11BB) aus der ebenen Oberfläche (11A) bis zu einer dritten Aussparungstiefe ausgespart ist und die dritte Aussparungstiefe größer als die erste Aussparungstiefe und größer als die zweite Aussparungstiefe ist;
eine Querschnittsform der Aussparung im Grenzbereich (11BB) eine Form ist, in der eine seitliche Oberfläche der Aussparung im Grenzbereich (11BB) in Bezug auf die normale Richtung einer Oberfläche des Substrats (13) geneigt ist;
der zweite Bereich (11B2) eine Vielzahl von linearen Bereichen einschließt, die auf der geprägten Oberfläche regelmäßig angeordnet sind;
die optische Interaktionsschicht (12) einen wellenoptischen Bereich (12B) einschließt, der in einer Dickenrichtung der Prägeschicht betrachtet mindestens einen Teil des zweiten Bereichs (11B2) überlappt;
ein Betrachter die optische Struktur (10) von einer Seite der optischen Interaktionsschicht (12) gegenüberliegend zu der, die zu der Prägeschicht (11) zeigt, betrachtet;
der erste Bereich (11B1) Licht reflektiert, um ein erstes Bild (PIC1) in einer Anzeigerichtung anzuzeigen;
der wellenoptische Bereich (12B) mindestens eine optische Beugungs-, Interferenz-, Streu-, Absorptions- und Resonanzfunktion von Licht durchführt, mit dem der wellenoptische Bereich bestrahlt wird, dadurch ein zweites Bild (PIC2) in der Anzeigerichtung anzeigt, wobei das zweite Bild in mindestens einem von Farbe und Helligkeit vom ersten Bild unterschiedlich ist;
der erste Bereich (11B1) eine Vielzahl von ersten linearen Bereichen einschließt, die in Draufsicht auf der geprägten Oberfläche regelmäßig angeordnet sind;
der wellenoptische Bereich (12B) eine Vielzahl von zweiten linearen Bereichen (12BL) einschließt, die in Draufsicht auf der geprägten Oberfläche regelmäßig angeordnet sind; und
die ersten linearen Bereiche und die zweiten linearen Bereiche in Draufsicht auf der geprägten Oberfläche abwechselnd angeordnet sind;
die Vielzahl von zweiten linearen Bereichen (12BL) einen linearen Bereich (12BL) einschließt, der eine dünne Linie (BL1) und eine dicke Linie (BL2) aufweist;
die dicke Linie (BL2) ein Abschnitt des zweiten linearen Bereichs (12BL) ist, die eine größere Breite aufweist als die dünne Linie (BL1); und
das aus den wellenoptischen Bereichen (12B) gebildete zweite Bild (PIC2) eine vorbestimmte Form einschließt, die durch die Außenform ausgedrückt wird, die von der Vielzahl von dicken Linien (BL2) gebildet ist.

2. Optische Struktur (10) nach Anspruch 1, wobei:
der erste Bereich (11B1) eine Vielzahl von Reflexionsoberflächen (12A) einschließt;
die Vielzahl von Reflexionsoberflächen jeweils Licht in der Anzeigerichtung reflektiert und sich in einer ersten Richtung erstreckt; und
die Vielzahl von Reflexionsoberflächen im gleichen Abstand in einer zweiten Richtung orthogonal zu der ersten Richtung angeordnet ist.

3. Optische Struktur (10) nach Anspruch 1, wobei:
der erste Bereich (11B1) eine Vielzahl von Reflexionsoberflächen (12A) einschließt;
die Vielzahl von Reflexionsoberflächen jeweils Licht in der Anzeigerichtung reflektiert und sich in einer ersten Richtung erstreckt; und
die Vielzahl von Reflexionsoberflächen in einer zweiten Richtung orthogonal zu der ersten Richtung angeordnet ist und ein Abstand zwischen den Reflexionsoberflächen in der zweiten Richtung eine Vielzahl von Werten aufweist.

4. Optische Struktur (10) nach Anspruch 1, wobei die Vielzahl von linearen Bereichen mindestens einen geraden Linienbereich und einen gekrümmten Bereich einschließt.

## Revendications

1. Structure optique (10) comprenant :
un substrat (13) ;
une couche gaufrée (11) qui présente une surface gaufrée (11R) gaufrée par un cylindre de gaufrage et qui est située sur une d'une paire de surfaces opposées du substrat (13), la surface gaufrée présentant une surface plate (11A) et une surface irrégulière (11B) ; et
une couche d'interaction optique (12) qui recouvre et suit la surface gaufrée et montre une fonction optique de la surface gaufrée, dans laquelle :
la surface irrégulière (11B) inclut une première région (11B1), une seconde région (11B2) et une région formant limite (11BB) qui est située entre la première région et la seconde région, et les régions incluent chacune un évidement qui est évidé à partir de la surface plate ;
la première région (11B1) est un premier motif en relief présentant une configuration irrégulière et la seconde région (11B2) est un second motif en relief présentant une configuration irrégulière ;
l'évidement dans la première région (11B1) est évidé à partir de la surface plate (11A) jusqu'à une première profondeur d'évidement, l'évidement dans la seconde région (11B2) est évidé à partir de la surface plate (11A) jusqu'à une deuxième profondeur d'évidement et la première profondeur d'évidement est plus grande que la deuxième profondeur d'évidement ;
l'évidement dans la région limite (11BB) est évidé à partir de la surface plate (11A) jusqu'à une troisième profondeur d'évidement et la troisième profondeur d'évidement est plus grande que la première profondeur d'évidement et plus grande que la deuxième profondeur d'évidement ;
une forme en coupe transversale de l'évidement dans la région formant limite (11BB) est une forme dans laquelle une surface latérale de l'évidement dans la région formant limite (11BB) est inclinée par rapport à la direction normale d'une surface du substrat (13) ;
la seconde région (11B2) inclut une pluralité de régions linéaires qui sont agencées de manière régulière sur la surface gaufrée ;
la couche d'interaction optique (12) inclut une région optique ondulée (12B) qui chevauche au moins une partie de la seconde région (11B2) lorsqu'elle est observée dans une direction d'épaisseur de la couche gaufrée ;
un observateur observe la structure optique (10) depuis un côté de la couche d'interaction optique (12) opposée à celle faisant face à la couche gaufrée (11) ;
la première région (11B1) réfléchit la lumière pour afficher une première image (PIC1) dans une direction d'affichage ;
la région optique ondulée (12B) réalise au moins une fonction optique de diffraction, d'interférence, de dispersion, d'absorption et de résonance de la lumière avec laquelle la région optique ondulée est irradiée, affichant ainsi une seconde image (PIC2) dans la direction d'affichage, la seconde image étant différente dans au moins une d'une couleur et d'une luminosité par rapport à la première image ;
la première région (11B1) inclut une pluralité de première régions linéaires qui sont agencées de manière régulière dans une vue de dessus de la surface gaufrée ;
la région optique ondulée (12B) inclut une pluralité de secondes régions linéaires (12BL) qui sont agencées de manière régulière dans une vue de dessus de la surface gaufrée ; et
les premières régions linéaires et les secondes régions linéaires sont agencées en alternance dans une vue de dessus de la surface gaufrée ;
la pluralité de secondes régions linéaires (12BL) incluent une région linéaire (12BL) présentant une ligne fine (BL1) et une ligne épaisse (BL2) ;
la ligne épaisse (BL2) est une partie de la seconde région linéaire (12BL) présentant une largeur plus grande que la ligne fine (BL1) ; et
la seconde image (PIC2) constituée des régions optiques ondulées (12B) inclut une forme prédéterminée exprimée par la forme externe constituée de la pluralité de lignes épaisses (BL2).

2. Structure optique (10) selon la revendication 1, dans laquelle :
la première région (11B1) inclut une pluralité de surfaces réfléchissantes (12A) ;
la pluralité de surfaces réfléchissantes réfléchissent chacune une lumière dans la direction d'affichage et s'étendent dans une première direction ; et
la pluralité de surfaces réfléchissantes sont agencées selon le même pas dans une seconde direction orthogonale à la première direction.

3. Structure optique (10) selon la revendication 1, dans laquelle :
la première région (11B1) inclut une pluralité de surfaces réfléchissantes (12A) ;
la pluralité de surfaces réfléchissantes réfléchissent chacune une lumière dans la direction d'affichage et s'étendent dans une première direction ; et
la pluralité de surfaces réfléchissantes sont agencées dans une seconde direction orthogonale à la première direction, et un pas entre les surfaces réfléchissantes dans la seconde direction présente une pluralité de valeurs.

4. Structure optique (10) selon la revendication 1, dans laquelle la pluralité de régions linéaires incluent au moins une d'une région de ligne droite et d'une région incurvée.
